# NEUE EUROPÄISCHE PATENTSCHRIFT

(11) **EP 1 381 640 B2**
(45) Veröffentlichungstag und Bekanntmachung des Hinweises auf die Entscheidung über den Einspruch: **12.11.2008**
(45) Hinweis auf die Patenterteilung: 08.09.2004
(21) Anmeldenummer: 02712873.5
(22) Anmeldetag: 30.01.2002
(51) Int. Cl.: C08G 75/02, C08G 63/06, C08L 79/08, H01M 8/02, H01B 1/20, H01B 1/22, H01B 1/24, C08L 81/02, C08G 63/19, C08G 63/183, C08K 3/04, C08K 3/08

(54) **VERWENDUNG LEITFÄHIGER KUNSTSTOFFFORMMASSEN**
USE OF CONDUCTIVE PLASTIC MOULDING MATERIAL
UTILISATION DE MATERIAU DE MOULAGE CONDUCTEURteur

(30) Priorität: 13.03.2001 DE 10112394
(43) Veröffentlichungstag der Anmeldung: 21.01.2004
(73) Patentinhaber: Ticona GmbH, 65451 Kelsterbach (DE)
(72) Erfinder: HOFMANN, Achim, 64668 Rimbach (DE); FRITZ, Hans-Gerhard, 73066 Uhingen (DE); KAISER, Ralf, 70193 Stuttgart (DE)
(86) Internationale Anmeldenummer: PCT/EP2002/000936
(87) Internationale Veröffentlichungsnummer: WO 2002/072669

(56) Entgegenhaltungen:
- EP-A- 0 351 660
- EP-A- 0 355 615
- EP-A- 0 437 851
- EP-A- 0 953 606
- WO-A-00/44005
- US-B1- 6 180 275

## Beschreibung

Vor dem Hintergrund der Verknappung nichtregenerativer Energieträger ist die Forschung an Brennstoffzellen von Interesse. Eines der bislang kostenintensivsten Teile einer Brennstoffzelle ist die Bipolarplatte.
Derzeit werden zur Herstellung der Bipolarplatten V2A- und V4A-Stähle verwendet. Nachteilig sind hierbei die hohen Kosten des Materials, die schwierige Bearbeitung, die oftmals nicht ausreichende Korrosionsbeständigkeit sowie das hohe Gewicht, da die Dichten im Bereich von 7-8 g/ml liegen.
Aluminium ist mit Dichten im Bereich von 2,7 g/ml zwar leichter, aber ebenfalls kostenintensiv und bildet Oxidschichten aus, die zur Erhöhung des Oberflächenwiderstandes führen.
Graphit besitzt eine Dichte von 2,24 g/ml, jedoch ist die mechanische Stabilität gering, so daß die Dicke nicht beliebig reduziert werden kann. Durch Gaspermeation in die Schichtgitterstruktur treten darüber hinaus weitere Probleme auf.
Um diese Nachteile zu beheben, wurden zum Beispiel Graphit-Polymer-Composite auf Duromerharzbasis entwickelt. Das US-Patent 4 339 322 offenbart Compounds auf Basis fluorierter und teilfluorierter Polymere. Nachteilig sind hierbei jedoch die mangelnde Rezyklierbarkeit und hohe Zykluszeiten bei der Produktion.
Es ist bekannt, daß Ruß/Polymer-Compounds in Folge ihrer Struktur schon bei 5 bis 20 Gewichtsprozent Rußgehalt Grenzleitfähigkeiten von etwa 10 S/cm besitzen. Nachteilig bei diesen Formmassen ist jedoch deren schlechte Fließfähigkeit, die sich nachteilig auf die Verarbeitbarkeit auswirkt.

Ein kohlenstoffhaltiger Compound auf Basis von Polyphenylensulfid oder flüssigkristallinem Kunststoff wird in WO 00/30202 beschrieben. Hier werden Kohlenstoffpulver und Kohlefasern in Kombination eingesetzt

Aufgabe der vorliegenden Erfindung ist es, durch einfache Maßnahmen die Nachteile des Standes der Technik zu beheben. Diese Aufgabe wird gelöst durch die Verwendung einer Kunststoffformmasse basierend auf Polyarylensulfid und/oder flüssigkristallinem Kunststoff, wobei der Compound Ruß und Graphit und/oder Metallpulver enthält, der Ruß eine spezifische Oberfläche von 500 bis 1500 m²/g, eine Dibutylphthalatzahl von 100 bis 700 ml/100g und der Graphit eine spezifische Oberfläche von 1 m²/g bis 35 m²/g besitzt, zur Herstellung von Formkörpern, wobei die Formkörper eine Bipolarplatte, eine Endplatte oder ein Teil einer Endplatte einer Brennstoffzelle sind.

Die massenbezogenen Füllgrade φM der erfindungsgemäß verwendeten Formmassen sind von Null verschieden und kleiner als 85, vorteilhaft kleiner oder gleich 80 und besonders vorteilhaft im Bereich von 60 bis 80.
Die Formmassen können vorteilhaft noch Gleitmittel mit innerer und äußerer Gleitwirkung enthalten, die nach der Compoundierung auch entfernt werden können.

Es wurde überraschend gefunden, daß bei der erfindungsgemäß verwendeten Formmasse durch die Verwendung von Ruß zusammen mit Graphit und/oder Metallpulver ein unerwarteter synergistischer Effekt auftritt.
Verglichen mit herkömmlichen Rußcompounds besitzen die Formmassen bessere elektrische Leitfähigkeiten und Wärmeleitfähigkeiten bei verbesserter Fließfähigkeit und verbesserten mechanischen Eigenschaften. Verglichen mit Graphitcompounds besitzen die Formmassen eine gleiche elektrische Leitfähigkeit und ähnliche Wärmeleitfähigkeit bei reduzierter Dichte und höherer Festigkeit.
Als Ruß können Leitfähigkeitsruße mit einer spezifischen Oberfläche von 500 bis 1500 m²/g, vorteilhaft von 800 bis 1250 m²/g, eingesetzt werden. Die erfindungsgemäß geeigneten Ruße haben darüber hinaus eine Dibutylphthalatzahl von 100 bis 700 ml/100g, vorteilhaft von 200 bis 700 ml/100g, besonders vorteilhaft von 300 bis 520 ml/100g, insbesondere in den Bereichen von 300 bis 345 ml/100g und 470 bis 520 ml/100g. Die Teilchengrößen der Ruße in der Polymermatrix der Formmasse liegen im Bereich von 0,01 µm bis 2 µm, vorteilhaft in den Bereichen von 0,05 µm bis 0,15 µm. Die Primärteilchengröße liegt im Bereich von 0,02 µm bis 0,05 µm. Die verwendeten Ruße besitzen Agglomerat-Teilchengrößen von 10-50 µm, Dichten von 0,1 bis 1,6 g/ml, spezifische elektrische Widerstände im Bereich von 10 bis 80*10⁻⁴ Ω*cm, vorteilhaft von 30 bis 50*10⁻⁴ Ω*cm, insbesondere 40*10⁻⁴ Ω*cm und niedrige Wärmeleitfähigkeiten von weniger als 0,15 W/m*K, insbesondere 0,07 W/m*K. Die elektrischen Leitfähigkeiten im Verhältnis zum Füllgrad (der Perkolationskurvenverlauf) läßt sich durch die Struktur des Rußes in der Matrix modifizieren, so daß der Fachmann durch Änderungen beim Scherenergieeintrag und der Verweilzeit die Produkteigenschaften leicht kontrollieren und optimieren kann

Der erfindungsgemäß verwendete Graphit ist ein Graphit mit einer schwach ausgebildeten Struktur. Die spezifische Oberfläche des Graphits beträgt 1 m²/g bis 35 m²/g, vorteilhaft 2 m²/g bis 20 m²/g, besonders vorteilhaft 3 m²/g bis 10 m²/g. Der Graphit besitzt eine Partikelgröße von 1 µm bis 1100 µm bei einer mittleren Partikelgröße von 50 bis 450 µm.
Vorteilhaft liegt die Partikelgröße im Bereich von 10 bis 1000 µm, besonders vorteilhaft von 10 bis 800 µm, ganz besonders vorteilhaft von 10 bis 500 µm. Die mittlere Partikelgröße liegt vorteilhaft im Bereich von 100 bis 300 µm, besonders vorteilhaft bei 200 µm. Die Zahlenangaben sind hierbei unkorrigierte Werte, die um die Fehlergrenzen der verwendeten Meßverfahren nach kleineren oder größeren Werten korrigiert werden müssen. Der verwendete Graphit besitzt außerdem hohe Wärmeleitfähigkeiten von mehr als 100 W/m K, vorteilhaft mehr als 180 W/m K, besonders vorteilhaft mehr als 200 W/m K. Die spezifischen elektrischen Widerstände liegen im Allgmeinen bei 5 bis 15* 10⁻⁴ Ω cm, vorteilhaft bei weniger als 10 * 10⁻⁴ Ω cm, insbesondere bei etwa 8 * 10⁻⁴ Ω cm.

Als Metallpulver können prinzipiell alle Metallpulver mit einer definierten Partikelgröße und Partikelverteilung eingesetzt werden.
Das verwendete Metallpulver besitzt vorteilhaft eine Fülldichte nach ISO 3923/1 von 1 bis 4 g/ml, vorteilhaft von 2,7 bis 3,2 g/ml, besonders vorteilhaft von 2,8 bis 3,1 g/ml.
Das verwendete Metallpulver besitzt Teilchengrößen bis 45 µm zu einem Anteil von 5 Gew.-%, vorteilhaft von 4 bis 1 Gew.-%, besonders vorteilhaft von weniger als 1 Gew.-%, insbesondere 0,8 Gew.-%. Die Teilchengrößen von größer 45 µm liegen zu mehr als 95 Gew.-% vor, vorteilhaft zu 96 bis 99 Gew.-%, besonders vorteilhaft bei mehr als 99 Gew.-%, insbesondere 99,2 Gew.-%. Vorteilhaft einsetzbar als Metallpulver sind zum Beispiel Aluminium, Chrom, Eisen, Gold, Iridium, Kobalt, Kupfer, Magnesium, Mangan, Molybdän, Nickel, Niob, Osmium, Palladium, Platin, Rhenium, Rhodium, Samarium, Silber, Titan, Vanadium, Wismut, Wolfram, Zink, Zinn, Legierungen oder Mischungen aus zwei oder mehreren dieser Metalle, auch Mischungen und/oder Legierungen, die bei den Verarbeitungsbedingungen flüssig sind. Nur beispielhaft für Legierungen seien an dieser Stelle Messing, Stahl, V2A-Stahl, oder V4A-Stahl genannt.

Erfindungsgemäß können die an sich bekannten Polyarylensulfide eingesetzt werden. Geeignete Materialien werden zum Beispiel beschrieben in Saechtling, Kunststoff-Taschenbuch, Hanser-Verlag, 27. Ausgabe, auf den Seiten 495 bis 498, worauf Bezug genommen wird. Vorteilhaft sind thermoplastische Polyarylensulfide. Besonders vorteilhaft ist Polyphenylensulfid, PPS.

Polyarylensulfide können über dihalogenierte aromatische Verbindungen hergestellt werden. Bevorzugte dihalogenierte aromatische Verbindungen sind p-Dichlorbenzol, m-Dichlorbenzol, 2,5-Dichlortoluol, p-Dibrombenzol, 1,4-Dichlomaphthalin, 1-Methoxy-2,5-dichlorbenzol, 4,4'-Dichlorbiphenyl, 3,5-Dichlorbenzoesäure, 4,4'-Dichlordiphenylether, 4,4'-Dichlodiphenylsulfon, 4,4'-Dichtordiphenylsulfoxid und 4,4'-Dichlordiphenylketon. Andere halogenierte Verbindungen wie beispielsweise trihalogenierte Aromaten können in geringen Mengen eingesetzt werden, um die Eigenschaften des Polymeren gezielt zu beeinflussen.

Erfindungsgemäß wird als Polyarylensulfid bevorzugt Polyphenylensulfid eingesetzt. Polyphenylensulfid (PPS), ist ein teilweise kristallines Polymer mit der allgemeinen Formel: 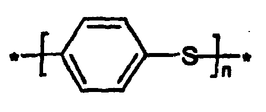 wobei n > 1 ist und das Polymer mindestens eine Molmasse (M_{w}) von größer 200 g/mol besitzt.

Erfindungsgemäß können ferner die an sich bekannten flüssigkristallinen Kunststoffe (LCP) eingesetzt werden. Bezüglich des Typs der verwendeten Materialien bestehen keine Einschränkungen, vorteilhaft sind jedoch Materialien, die sich thermoplastisch verarbeiten lassen. Besonders geeignete Materialien sind zum Beispiel in Saechtling, Kunststoff-Taschenbuch, Hanser-Verlag, 27. Ausgabe, auf den Seiten 517 bis 521 beschrieben, worauf Bezug genommen wird. Vorteilhaft einsetzbare Materialien sind Polyterephthalate, Polyisophthalate, PET-LCP, PBT-LCP, Poly(mphenylenisophthalamid), PMPI-LCP, Poly(p-phenylenphthalimid), PPTA-LCP, Polyarylate, PAR-LCP, Polyestercarbonate, PEC-LCP, Polyazomethine, Polythioester, Polyesteramide, Polyesterimide. Besonders vorteilhaft sind auf p-Hydroxybenzoesäure basierende flüssigkristalline Kunststoffe wie Copolyester und Copolyesteramide. Ganz besonders vorteilhaft als flüssigkristalline Kunststoffe einzusetzen sind im allgemeinen vollaromatische Polyester, die anisotrope Schmelzen bilden und mittlere Molekulargewichte (Mw=Gewichtsmittel) von 2000 bis 200000, bevorzugt von 3500 bis 50000 und insbesondere von 4000 bis 30000 g/mol aufweisen. Eine geeignete Klasse flüssigkristalliner Polymere ist beschrieben in US-A-4 161 470, worauf Bezug genommen wird. Es handelt sich dabei um Naphthoyl-Copolyester mit wiederkehrenden Struktureinheiten der Formel I und II 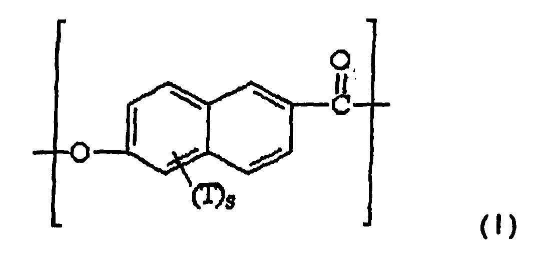 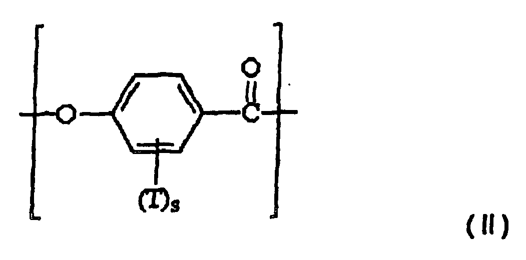 worin T ausgewählt ist aus einem Alkylrest, einem Alkoxyrest, jeweils mit 1 bis 4 Kohlenstoffatomen oder einem Halogen, vorzugsweise Chlor, Brom oder Fluor, s bedeutet Null oder eine ganze Zahl 1, 2, 3 oder 4, wobei im Falle mehrerer Reste T diese unabhängig voneinander gleich oder verschieden sind. Die Naphthoyl-Copolyester enthalten 10 bis 90 Mol-%, vorzugsweise 25 bis 45 Mol-% Struktureinheiten der Formel I und 90 bis 10 Mol-%, vorzugsweise 85 bis 55 Mol-% Struktureinheiten der Formel II, wobei sich die Anteile der Struktureinheiten der Formeln I und II auf 100 Mol-% ergänzen.

Weitere für die erfindungsgemäß verwendeten Formmassen geeignete flüssigkristalline Polyester sind in EP-A-0 278 066 und US-A-3 637 595 beschrieben, worauf Bezug genommen wird. Die dort angeführten Oxybenzoylcopolyester enthalten Struktureinheiten der Formeln III, IV und V, wobei jeweils ein oder mehrere genannte Struktureinheiten vorliegen können.

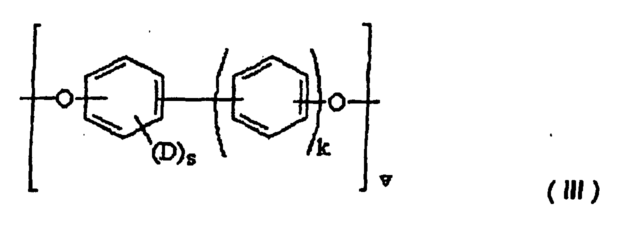

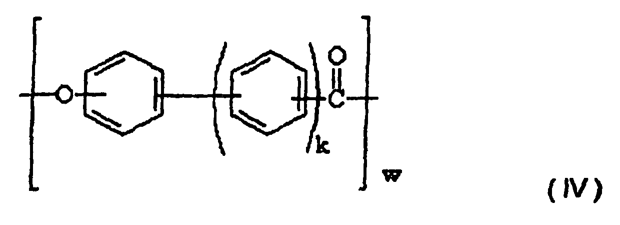

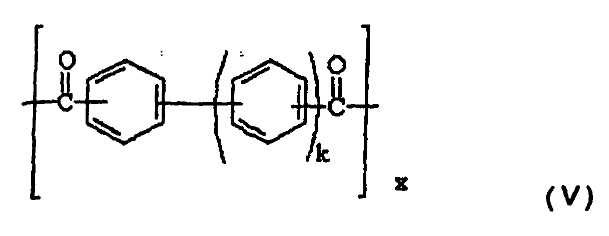

In den Formeln III, IV und V ist k Null oder 1, v, w und x sind ganze Zahlen, die gleich oder größer als 1 sind, D ist ausgewählt aus einem Alkylrest mit 1 bis 4 Kohlenstoffatomen, einem Arylrest, einem Aralkylrest mit jeweils 6 bis 10 Kohlenstoffatomen oder einem Halogen wie Fluor, Chlor oder Brom, s hat die obengenannte Bedeutung, wobei bei mehreren Resten D diese unabhängig voneinander gleich oder verschieden sind. Die Summe der Indexzahlen v, w und x weist Werte von 30 bis 600 auf. Die Oxybenzoylcopolyester enthalten im allgemeinen 0,6 bis 60, vorzugsweise 8 bis 48 Mol-% Struktureinheiten der Formel III, 0,4 bis 98,5, vorzugsweise 5 bis 85 Mol-% Struktureinheiten der Formel IV und 1 bis 60, vorzugsweise 8 bis 48 Mol-% Struktureinheiten der Formel V, wobei sich die Anteile der Struktureinheiten der Formeln III, IV und V auf 100 Mol-% ergänzen.

Ebenfalls geeignet sind Copolyester, die nur Struktureinheiten der Formeln III und V enthalten. Diese flüssigkristallinen Polymere enthalten im allgemeinen 40 bis 60 Mol-% der Struktureinheiten der Formel III und 60 bis 40 Mol-% Struktureinheiten der Formel V. Bevorzugt ist hierbei ein Molverhältnis von 1 zu 1. Solche Polyester werden zum Beispiel in US-A-4 600 765; US-A-4 614 790 und US-A-4 614 791 beschrieben, worauf Bezug genommen wird.

Ebenfalls geeignet sind solche Copolyester, die neben den Struktureinheiten ausgewählt aus den Formeln III bis V, auch solche der Formeln I und/oder II enthalten; z.B. mit einem Anteil an Struktureinheiten der Formel I von 15 bis 1 Mol-%, der Formel II von 50 bis 79 Mol-%, der Formel III von 20 bis 10 Mol-% und der Formel V von 20 bis 10 Mol-%.

Für die erfindungsgemäß verwendeten Formmassen besonders vorteilhaft einsetzbare flüssigkristalline Kunststoffe sind außerdem Copolyesteramide, die neben einer oder mehreren Struktureinheiten der Formeln I bis V noch zusätzlich mindestens eine Struktureinheit der Formel VI oder VII 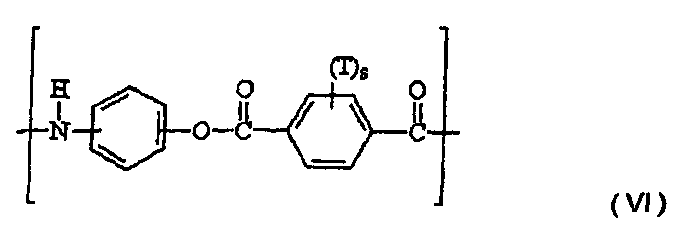 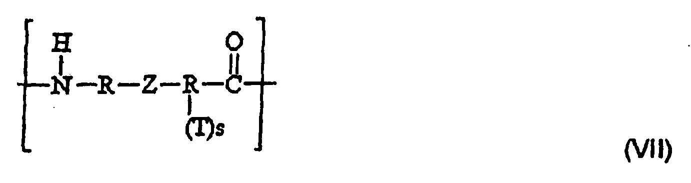 enthalten, worin R ein Phenylen oder Naphthoylen, Z eine Gruppe CO oder O (Sauerstoff) sein kann, T und s die oben beschriebene Bedeutung besitzen. Die geeigneten flüssigkristallinen Kunststoffe können einzeln oder als Mischungen eingesetzt werden.
Weitere geeignete flüssigkristalline Kunststoffe enthalten neben den Struktureinheiten I bis VII noch zusätzlich mindestens eine Struktureinheit VIII 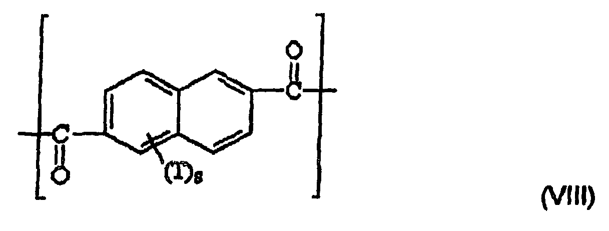 wobei T und s die oben beschriebene Bedeutung besitzen.

Sowohl der flüssigkristalline Kunststoff als auch das Polyarylensulfid können übliche Zusatz- und Verstärkungsstoffe enthalten, wie zum Beispiel Fasern, insbesondere Glasfasern, Kohlefasern, Aramidfasern, Mineralfasern, Verarbeitungshilfen, polymere Gleitstoffe, Gleitmittel mit äußerer und/oder innerer Gleitwirkung, ultrahochmolekulares Polyethylen (PE-UHMW), Polytetrafluorethylen (PTFE) oder ein Pfropf-Copolymer, welches ein Produkt einer Pfropfreaktion aus einem Olefin-Polymer und einem Acrylnitril/Styrol-Copolymer ist, Antioxidantien, Haftvermittler, Wachse, Nukleierungsmittel, Entformungshilfen, Glaskugeln, mineralische Füllstoffe wie Kreide, Calciumcarbonat, Wollastonit, Siliciumdioxid, Talk, Glimmer, Montmorillonit, organisch modifiziert oder unmodifiziert, organisch modifizierte oder unmodifizierte Schichtsilikate, mit dem flüssigkristallinen Kunststoff oder dem Polyarylensulfid Nanokomposite bildende Materialien oder Nylon-Nanokomposite oder Mischungen der vorgenannten Stoffe.

Als Gleitmittel eingesetzt werden kann ein Gemisch aus einem Gleitmittel mit äußerer Gleitwirkung und aus einem Gleitmittel mit innerer Gleitwirkung. Das Mischungsverhältnis Gleitmittel mit innerer Gleitwirkung zu Gleitmittel mit äußerer Gleitwirkung kann von 0 zu 100 bis 100 zu 0 Gewichtsteilen betragen. Als Gleitmittel mit überwiegend äußerer Gleitwirkung können feste und/oder flüssige Paraffine, Montansäureester, teilverseifte Montansäureester, Stearinsäuren, polare und/oder unpolare Polyethylenwachse, Poly-α-Olefin-Oligomere, Silikonöle, Polyalkylenglykole und Perfluoralkylether eingesetzt werden. Seifen und Ester, auch teilverseifte, sind sowohl Gleitmittel mit äußerer als auch innerer Gleitwirkung. Bevorzugt wird ein hochmolekulares, oxidiertes und damit polares Polyethylenwachs eingesetzt. Es verbessert das tribologische Verhalten und läßt die mechanischen Eigenschaften weniger stark abfallen. Als Gleitmittel mit überwiegend innerer Gleitwirkung wird bevorzugt Stearylstearat eingesetzt.
Paraffine fest und flüssig, Stearinsäuren, Polyethylenwachse unpolar und polar, Poly-α-Olefin Oligomere, Silikonöle, Polyalkylenglykole und Perfluoralkylether sind Gleitmittel mit äußerer Gleitwirkung. Seifen und Ester, auch teilverseifte, sind Gleitmittel mit sowohl äußerer als auch innerer Gleitwirkung. Montansäureester und Montansäureester teilverseift sind Gleitmittel mit äußerer Gleitwirkung.
Das bevorzugte oxidierte Polyethylenwachs ist ein hochmolekulares, polares Wachs und besitzt im allgemeinen eine Säurezahl von 12 bis 20 mg KOH/g und eine Viskosität von 3000 bis 5000 mPa·s bei 140°C.

Als Gleitmittel mit überwiegend innerer Gleitwirkung sind zu nennen: Fettalkohole, Dicarbonsäure-Ester, Fettsäure-Ester, Fettsäure, fettsaure Seifen, Fettamid , Wachsester und Stearylstearat wobei letztgenanntem der Vorzug gegeben wird. Gleitmittel werden beschrieben in Gächter/Müller, "Taschenbuch der Kunststoff-Additive", 3. Ausgabe, Carl Hanser Verlag München/Wien 1994, Seite 478-504, worauf Bezug genommen wird.

Die Formmassen lassen sich nach den herkömmlichen Verfahren für thermoplastische Kunststoffe herstellen und verarbeiten, wie zum Beispiel Kneten, Extrudieren, Spritzgießen, Spritzpressen und Formpressen.

Zur Ausbildung einer guten elektrischen Leitfähigkeit im Bauteil sind die mittleren Partikelabmessungen des Graphits maßgeblich. Um diese Partikelabmessungen nicht zu stark durch hohe Scherkräfte zu reduzieren, ist es notwendig besonders schonende Aufbereitungs- und Formgebungsverfahren zu praktizieren. Verwendet werden, wie oben ausgeführt, Graphittypen mit einer mittleren Partikelgröße im Bereich von 50 bis 450 µm, vorteilhaft im Bereich von 100 bis 300 µm, besonders vorteilhaft bei 200 µm, die mit einem Füllgrad von kleiner als 85 Gew.-%, vorteilhaft von kleiner als oder gleich 80 Gew.-%, besonders vorteilhaft von 60 bis 80 Gew.-% in die erfindungsgemäßen Matrixpolymere eingearbeitet werden.

Als besonders vorteilhaft in bezug auf die Endprodukteigenschaften hat sich die Verwendung von Verfahren erwiesen, bei denen der Aufbereitungs- und Formgebungsschritt zu einem Einstufenverfahren vereinigt sind. Beispiele dafür sind das Spritzgieß-Compoundieren mit oder ohne Spritzprägeeinheit und das Strangablegeverfahren, das auf der Kombination von einem Aufbereitungsaggregat (Einwelle, Zweiwelle o.ä.) und einer Formpresseinheit basiert. Alle diese Einstufenverfahren stellen Verfahren des allgemeinen Fachwissens dar oder sind anderweitig aus der Literatur bekannt.
Spritzgieß-Compoundieren ohne Spritzprägeeinheit: siehe R. Jensen: Synergien intelligent nutzen - IMC-Spritzgießcompounder erhöht Wertschöpfung; Kunststoffe plast europe, 9/2001; sowie R. Jensen: Synergie schafft neue Technologie; Kunststoffe plast europe 10/2001, worauf Bezug genommen wird.
Spritzgieß-Compoundieren mit Spritzprägeeinheit (sogenanntes Spritzprägen): siehe F. Johannaber, W. Michaeli: Handbuch Spritzgiessen, Carl Hanser-Verlag, München (2001), ISBN 3-446-15632-1, Seite 417; sowie H. Saechtling:
Kunststofftaschenbuch, 27. Ausgabe, Carl Hanser-Verlag, München (1998), ISBN 3-446-19054-6, Seite 226, worauf Bezug genommen wird.
Strangablegen: T. Hofer: Fillflow - A comparison between simulation and experiment in the case of the extrusion compression moulding. Proceedings of the 3rd ESAFORM Conference on Material Forming, Stuttgart (2000); ISBN 3-00-005861-3; sowie R. D. Krause, Dissertation, Universität Stuttgart, Fakultät Verfahrenstechnik, Institut für Kunststofftechnologie (1998): Modellierung und Simulation rheologischthermodynamischer Vorgänge bei der Herstellung großflächiger thermoplastischer Formteile mittels Kompressionsformverfahren, worauf Bezug genommen wird.

Insbesondere die Verwendung eines Injection Moulding Compounders (IMC) erweist sich als vorteilhaft, da Aufbereitung und Formgebung des gefüllten Systems in einem Schritt, sozusagen in erster Wärme erfolgen. Wird zudem eine Spritzprägeeinheit bzw. Kompressionsformeinheit genutzt, reduziert sich die Partikelschädigung, verglichen mit dem simplen Spritzgießen drastisch. Diese Teilchenschädigung, hervorgerufen durch das Angreifen hoher Schubspannungen und Deformationsgeschwindigkeiten beim Einspritzen in das Formnest mit hohen Einspritzgeschwindigkeiten reduziert die Bauteilleitfähigkeit signifikant um Faktoren zwischen drei bis zehn. Durch die Verwendung der Spritzprägeeinheit ist es möglich, einen Schmelzekuchen schonend in der Kavität zu injizieren und die endgültige Bauteilausformung durch vollständiges Schließen der Kavität vorzunehmen.

Als besonders vorteilhaft hat sich aber auch die Formgebung durch Pressen mit Formpresswerkzeug (Tauchkantenwerkzeug), das sogenannte Formpressen, erwiesen, wobei es sich hier ebenso um ein Verfahren des allgemeinen Fachwissens handelt, das aus der Literatur einschlägig bekannt ist.

Formpressen: Kunststofftaschenbuch, 25. Ausgabe, Carl Hanser-Verlag, München (1998), ISBN 3-446-16498-7, Seite 113 ff., worauf Bezug genommen wird.

Hierbei erweist es sich als besonders vorteilhaft, wenn die Formmassen nach dem Aufbereitungschritt und vor dem Formpressvorgang vorgemahlen werden, z. B. auf einem Mahlwerk, einem Backenbrecher oder einer Ball- oder Stiftmühle. Partikelgrößen der vorgemahlenen Formmassen von 1500 bis 50 µm, bevorzugt von 1000 bis 100 µm und besonders bevorzugt von 800 bis 150 µm sind für die Formgebung durch Formpressen besonders vorteilhaft.

Die Formmassen sind einsetzbar für Teile von Brennstoffzellen, insbesondere Teile von Endplatten einer Brennstoffzelle, Endplatten sowie Bipolarplatten von Brennstoffzellen. Aus den erfindungsgemäßen Formmassen hergestellte Bipolarplatten, Endplatten und Endplattenteile sind zur Herstellung leistungsfähiger Brennstoffzellen mit einer spezifischen Leistung von größer einem Kilowatt pro Kilogramm geeignet, können spezifische elektrische Leitfähigkeiten von mehr als 100 S/cm erreichen und sind chemisch beständig gegen alle Betriebsstoffe einer Brennstoffzelle, wie zum Beispiel Leitungswasser, voll entmineralisiertes Wasser, Säuren, Wasserstoff, Methanol und sind für diese auch impermeabel; siehe hierzu auch die deutsche Patentanmeldung mit dem Aktenzeichen.-Nr. 10064656.5-45. Die Wärmeformbeständigkeit der Formmassen liegt bei >130°C bei 1,82 MPa Prüflast. Deren Biegefestigkeit beträgt 30 bis 50 MPa und liegt somit deutlich über der Mindestforderung von 20 MPa. Da keine spanende Bearbeitung nötig ist sondern herkömmliche Spritzguß- und Spritzprägeverfahren eingesetzt werden können, sind hohe Produktionsraten erreichbar. Durch die Wahl geeigneter Füllstoffsysteme sind Bauteile mit gleichen elektrischen Eigenschaften zugänglich, die einen um 10 bis 23 % reduzierten Füllstoffanteil und eine 3 bis10 % geringere Bauteildichte bei verbesserten mechanischen und rheologischen Eigenschaften besitzen. Daher können aus den Formmassen gefertigte Bauteile nicht nur in stationären Brennstoffzellen eingesetzt werden, sondern sind insbesondere auch für die Anwendung in mobilen Brennstoffzellen geeignet.

### Beispiele:

In den Beispielen wurden Formmassen aus flüssigkristallinem Kunststoff (Vectra A 950, Ticona GmbH, Frankfurt) hergestellt. Als Ruß wurde Ketjenblack EC-600JD der Firma Akzo Nobel mit einer Dibutylphthalatzahl von 480-510 ml/100g, einer Jodabsorption von 1000-1150 mg/g und einer Schüttdichte von 100-120 kg/m³ verwendet. Dieser Ruß enthält 7% an Teilchen mit einer Größe von weniger als 125µm. Als Graphit verwendet wurde Thermocarb CF-300 der Firma Conoco. Als Zinkpulver verwendet wurde ein Zinkpulver von Eckart Dorn, welches eine mittlere Partikelgröße von 20 µm, eine Fülldichte von 3,06 g/ml und 0,8 % Partikel mit einer Größe von kleiner als 45 µm (gemessen nach ISO 4497) besitzt. Bei den Vergleichsbeispielen ist der Füllgrad mit dem Gehalt des Füllstoffes identisch. Bei den Ruß/Graphit bzw. Ruß/Zink-Mischungen aus Tabelle 1 - 5 betrug der Rußgehalt 7,5 Gew.-%, der Füllgrad wurde durch Erhöhung des Graphitanteils bzw. Zinkanteils erreicht.

In Tabelle 1 sind die Ergebnisse von mit einem Buss-Co-Kneter (UD=15) hergestellten Formmassen aufgeführt, die Beispiele in Tabelle 2 wurden mit einer Wemer & Pfleiderer ZSK 25 mit einem UD-Verhältnis von 42 durchgeführt. Die Widerstandsmessungen wurden nach ISO 3915-1981 an Extrudat-Rundsträngen durchgeführt.

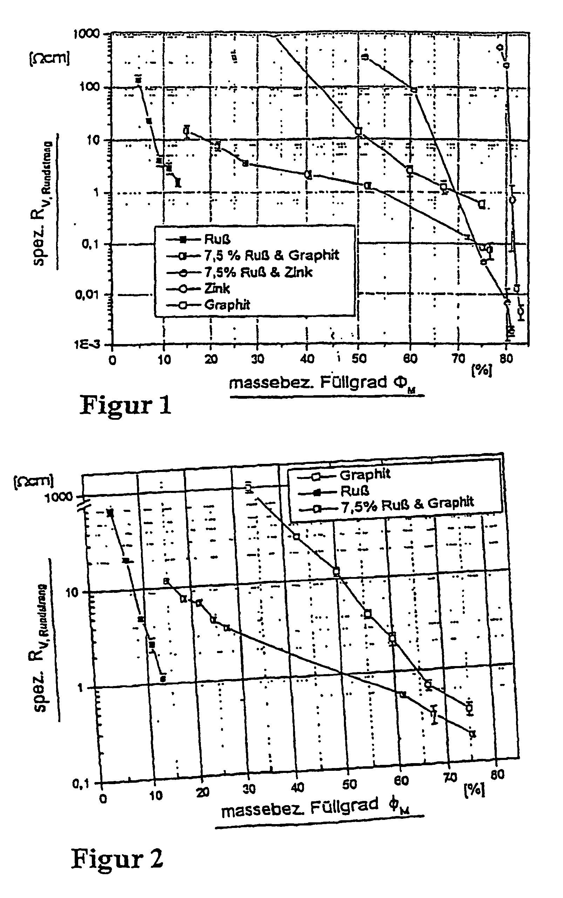

Die Ergebnisse aus Tabelle 1 sind in Figur 1, die Ergebnisse aus Tabelle 2 in Figur 2 in einer halblogarithmischen Auftragung graphisch dargestellt

**Tabelle 1**

| | Füllgrad φM / % | Spez. Widerstand RD / Ω cm | Dichte / g/ml |
|---|---|---|---|
| Ruß | | | |
| Vergleichsbeispiel 1 | 4,76 | 68,45 | 1,33 |
| Vergleichsbeispiel 2 | 6,98 | 20,67 | 1,3 |
| Vergleichsbeispiel 3 | 9,09 | 4,87 | 1,27 |
| Vergleichsbeispiel 4 | 11,11 | 2,59 | 1,24 |
| Vergleichsbeispiel 5 | 13,04 | 1,12 | 1,21 |

| Graphit | | | |
|---|---|---|---|
| Vergleichsbeispiel 6 | 33,33 | 999,72 | 1,68 |
| Vergleichsbeispiel 7 | 42,86 | 29,33 | 1,76 |
| Vergleichsbeispiel 8 | 50 | 11,82 | 1,82 |
| Vergleichsbeispiel 9 | 55,56 | 4,16 | 1,87 |
| Vergleichsbeispiel 10 | 60 | 2,18 | 1,9 |
| Vergleichsbeispiel 11 | 66,67 | 0,67 | 1,96 |
| Vergleichsbeispiel 12 | 75 | 0,36 | 2,03 |

| Ruß/Graphit | | | |
|---|---|---|---|
| Beispiel 13 | 14,89 | 11,77 | 1,39 |
| Beispiel 14 | 18,37 | 7,59 | 1,42 |
| Beispiel 15 | 21,57 | 6,69 | 1,46 |
| Beispiel 16 | 24,53 | 4,34 | 1,49 |
| Beispiel 17 | 27,28 | 3,49 | 1,51 |
| Beispiel 18 | 61,47 | 0,35 | 1,86 |
| Beispiel 19 | 67,48 | 0,25 | 1,93 |
| Beispiel 20 | 75,46 | 0,19 | 1,99 |

**Tabelle 2**

| | Füllgrad φM / % | Spez. Widerstand RD / Ω cm | Dichte / g/ml |
|---|---|---|---|
| Ruß | | | |
| Vergleichsbeispiel 21 | 4,76 | 137,12 | 1,34 |
| Vergleichsbeispiel 22 | 6,98 | 22,94 | 1,3 |
| Vergleichsbeispiel 23 | 9,09 | 4,01 | 1,28 |
| Vergleichsbeispiel 24 | 11,11 | 2,86 | 1,24 |
| Vergleichsbeispiel 25 | 13,04 | 1,53 | 1,21 |

| Graphit | | | |
|---|---|---|---|
| Vergleichsbeispiel 26 | 33,33 | 1021 | 1,68 |
| Vergleichsbeispiel 27 | 50 | 13,42 | 1,83 |
| Vergleichsbeispiel 28 | 60 | 2,49 | 1,9 |
| Vergleichsbeispiel 29 | 67 | 1,24 | 1,97 |
| Vergleichsbeispiel 30 | 75 | 0,6 | 2,04 |

| Zink | | | |
|---|---|---|---|
| Vergleichsbeispiel 31 | 78,57 | 575,12 | 2,64 |
| Vergleichsbeispiel 32 | 80 | 266,45 | 2,67 |
| Vergleichsbeispiel 33 | 81,25 | 0,72 | 2,69 |
| Vergleichsbeispiel 34 | 82,35 | 0,01 | 2,71 |
| Vergleichsbeispiel35 | 83,33 | 0,005 | 2,72 |

| Ruß/Graphit | | | |
|---|---|---|---|
| Beispiel 36 | 14,89 | 14,68 | 1,39 |
| Beispiel 37 | 21,57 | 7,5 | 1,46 |
| Beispiel 38 | 27,28 | 3,55 | 1,51 |
| Beispiel 39 | 40,29 | 2,12 | 1,64 |
| Beispiel 40 | 51,81 | 1,29 | 1,76 |
| Beispiel 41 | 71,83 | 0,136 | 1,98 |
| Beispiel 42 | 75,31 | 0,086 | 2,01 |
| Beispiel 43 | 76,74 | 0,077 | 2,03 |

| Ruß/Zink | | | |
|---|---|---|---|
| Beispiel 44 | 51,22 | 361,41 | 2,17 |
| Beispiel 45 | 60,78 | 85,77 | 2,33 |
| Beispiel 46 | 75,3 | 0,04 | 2,58 |
| Beispiel 47 | 80,19 | 0,01 | 2,66 |
| Beispiel 48 | 81,13 | 0,002 | 2,68 |

Die in den vorstehenden Beispielen und Vergleichsbeispielen angegebenen spezifischen Durchgangswiderstände wurden an Rundsträngen ermittelt, wie sie an der Düse des Aufbereitungsaggregates austreten. Diese Werte reduzieren sich bei den Ruß/Graphit-Formmassen um einen Faktor von ca. 5-20, je nach dem Druckniveau bei der Herstellung von Bipolarplatten. Zurückzuführen ist dies auf Kompaktierungseffekte des Materials und durch ihre Fließeigenschaften (Strukturviskoses Fließverhalten mit Fließgrenze), da beim Austritt aus der Düse Rißbildung beobachtet werden kann, was zu einer Erhöhung des spezifischen Widerstandes führt. Dies wird deutlich an den spezifischen Widerständen von Bipolarplatten, die aus Formmassen nach den Beispielen 41 und 43 hergestellt wurden. Diese sind in Tabelle 3 als Beispiele 49 und 50 aufgeführt.

**Tabelle 3**

| Beispiel | Massestrom Polymer / kg/h | Massestrom Ruß / kg/h | Massestrom Graphit / kg/h | Spez. Widerstand Compound / Ω cm | Spez. Widerstand Platte / Ω cm |
|---|---|---|---|---|---|
| 49 | 1,425 | 0,075 | 3,75 | 0,136 | 0,0187 |
| 50 | 1,425 | 0,075 | 4,5 | 0,077 | 0,0042 |

Es wurden systematisch weitere Formmassen mit variierten Rußgehalten hergestellt und an diesen Rundstrangmessungen und Messungen an einem Bipolarplatten-Rohling durchgeführt.

Bipolarplatten-Rohlinge wurden durch Formpressen auf einer Laborpresse vom Typ P300P mit Tauchkantenwerkzeug der Firma Collin hergestellt. Die Plattenfläche betrug 160*160 mm. Die Mischungen der Rohstoffe wurden im Werkzeug auf 300 °C aufgeheizt, anschließend für 5 min bei 100 - 250 bar gepresst und danach bei 50 - 125 bar im 900s von 300 °C auf 40 °C, also mit ∼ 0,3 °C/s abgekühlt.

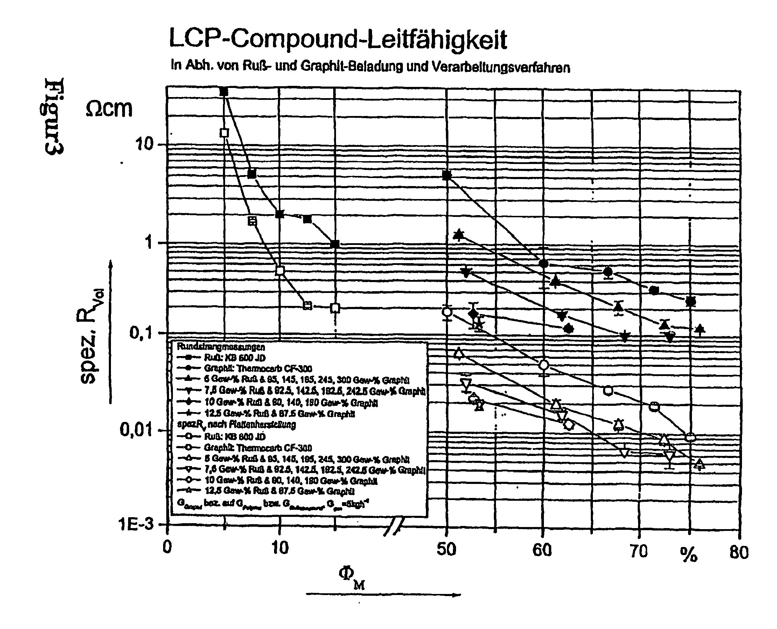

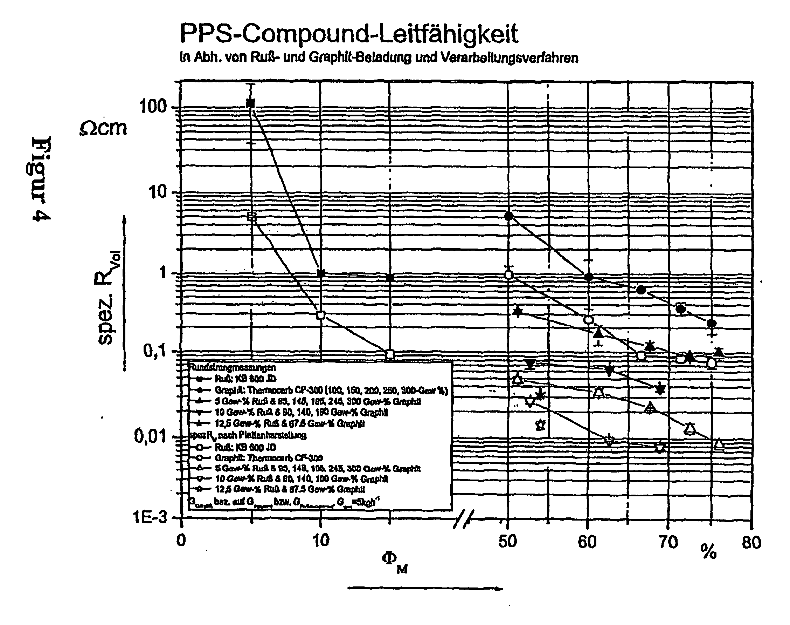

In Tabelle 4 werden die Ergebnisse der Messungen an flüssigkristallinem Kunststoff aufgeführt und in Figur 3 halblogarithmisch aufgetragen. In Tabelle 5 werden die Ergebnisse der Messungen an einem Polyphenylensulfid (Fortron, Ticona GmbH, Frankfurt) aufgeführt und in Figur 4 graphisch dargestellt. Bei den Vergleichsbeispielen ist der Füllgrad mit dem Gehalt des Füllstoffes identisch. Bei Ruß/Graphit-Mischungen ist der Rußgehalt angegeben, der Füllgrad wurde durch Graphitzugabe erreicht.

**Tabelle 4:**

| | φM / Gew.% | RD (Rundstrang) / Ω cm | RD (Bipolarplatte) / Ω cm | Dichte / g/ml |
|---|---|---|---|---|
| **LCP,** nur Ruß | | | | |
| Vergleichsbeispiel 51 | 5 | 35,49 | 13,45 | 1,42 |
| Vergleichsbeispiel52 | 7,5 | 5,24 | 1,71 | 1,43 |
| Vergleichsbeispiel 53 | 10 | 2,04 | 0,51 | 1,44 |
| Vergleichsbeispiel 54 | 12,5 | 1,84 | 0,21 | 1,45 |
| Vergleichsbeispiel 55 | 15 | 1,00 | 0,20 | 1,46 |

| **LCP,** nur Graphit | | | | |
|---|---|---|---|---|
| Vergleichsbeispiel 56 | 50 | 5,24 | 0,18 | 1,72 |
| Vergleichsbeispiel 57 | 60 | 0,63 | 0,05 | 1,81 |
| Vergleichsbeispiel 58 | 66,6 | 0,52 | 0,027 | 1,87 |
| Vergleichsbeispiel 59 | 71,4 | 0,33 | 0,019 | 1,91 |
| Vergleichsbeispiel 60 | 75 | 0,25 | 0,009 | 1,95 |

| **LCP,** 5% Ruß und Graphit | | | | |
|---|---|---|---|---|
| Beispiel 61 | 51,17 | 1,26 | 0,064 | 1,71 |
| Beispiel 62 | 61,24 | 0,40 | 0,019 | 1,80 |
| Beispiel 63 | 67,7 | 0,21 | 0,012 | 1,86 |
| Beispiel 64 | 72,45 | 0,13 | 0,009 | 1,92 |
| Beispiel 65 | 75,87 | 0,12 | 0,005 | 1,95 |

| **LCP,** 7,5% Ruß und Graphit | | | | |
|---|---|---|---|---|
| Beispiel 66 | 51,9 | 0,51 | 0,032 | 1,71 |
| Beispiel 67 | 61,89 | 0,17 | 0,016 | 1,81 |
| Beispiel 68 | 68,365 | 0,10 | 0,007 | 1,87 |
| Beispiel 69 | 72,99 | 0,10 | 0,006 | 1,92 |

| **LCP,** 10% Ruß und Graphit | | | | |
|---|---|---|---|---|
| Beispiel 70 | 52,66 | 0,18 | 0,022 | 1,73 |
| Beispiel 71 | 62,66 | 0,12 | 0,012 | 1,82 |

| **LCP,** 12,5% Ruß | | | | |
|---|---|---|---|---|
| Beispiel 72 | 53,275 | 0,14 | 0,019 | 1,74 |

**Tabelle 5:**

| | φM / Gew.-% | RD (Rundstrang) / Ω cm | RD (Bipolarplatte) / Ω cm | Dichte / g/ml |
|---|---|---|---|---|
| **PPS,** nur Ruß | | | | |
| Vergleichsbeispiel 73 | 5 | 111,77 | 13,45 | 1,42 |
| Vergleichsbeispiel 74 | 10 | 1,00 | 1,71 | 1,43 |
| Vergleichsbeispiel 75 | 15 | 0,89 | 0,51 | 1,44 |

| **PPS,** nur Graphit | | | | |
|---|---|---|---|---|
| Vergleichsbeispiel 76 | 50 | 5,26 | 0,99 | 1,72 |
| Vergleichsbeispiel77 | 60 | 0,93 | 0,26 | 1,81 |
| Vergleichsbeispiel 78 | 66,6 | 0,64 | 0,093 | 1,87 |
| Vergleichsbeispiel 79 | 71,4 | 0,36 | 0,085 | 1,91 |
| Vergleichsbeispiel 80 | 75 | 0,24 | 0,076 | 1,95 |

| **PPS,** 5 % Ruß und Graphit | | | | |
|---|---|---|---|---|
| Beispiel 81 | 51,17 | 0,32 | 0,048 | 1,69 |
| Beispiel 82 | 61,24 | 0,17 | 0,035 | 1,77 |
| Beispiel 83 | 67,7 | 0,12 | 0,023 | 1,84 |
| Beispiel 84 | 72,45 | 0,09 | 0,013 | 1,90 |
| Beispiel 85 | 75,87 | 0,10 | 0,009 | 1,94 |

| **PPS,** 10 % Ruß und Graphit | | | | |
|---|---|---|---|---|
| Beispiel 86 | 52,66 | 0,08 | 0,027 | 1,70 |
| Beispiel 87 | 62,56 | 0,06 | 0,01 | 1,78 |
| Beispiel 88 | 68,86 | 0,04 | 0,008 | 1,85 |

| **PPS,** 15 % Ruß und Graphit | | | | |
|---|---|---|---|---|
| Beispiel 89 | 53,93 | 0,03 | 0,014 | 1,70 |

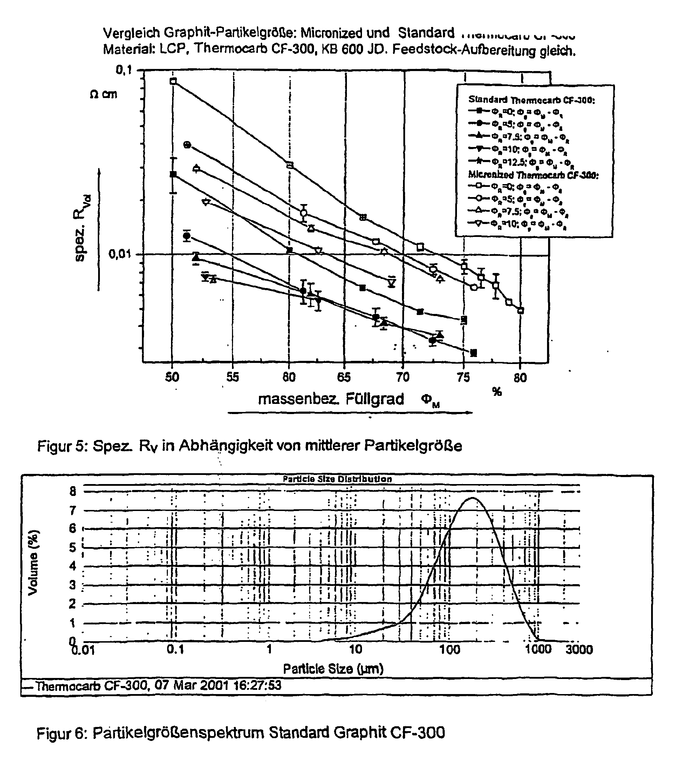

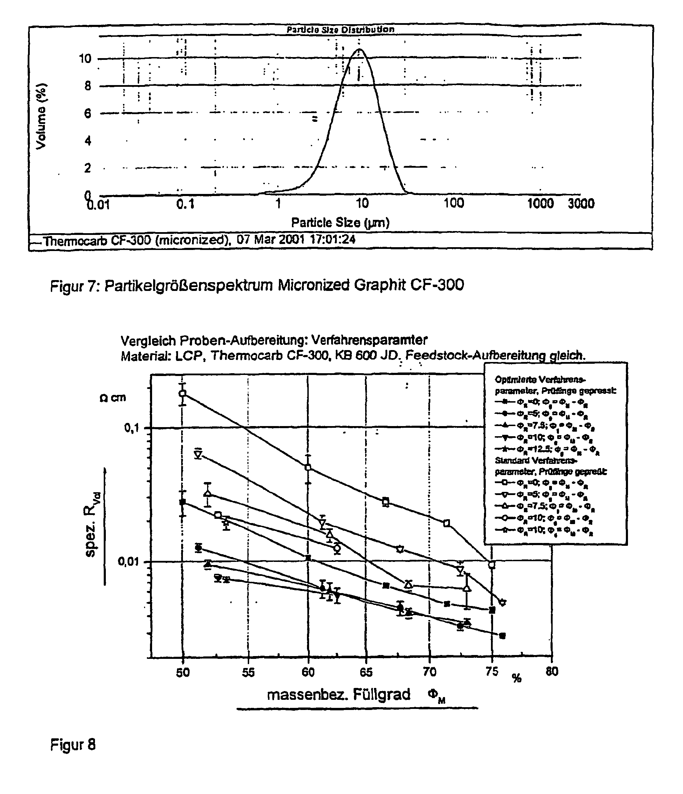

Den Einfluß der mittleren Graphit-Partikelgröße auf die ausgebildeten elektrischen Widerstandswerte zeigt Figur 5, 6 und 7. Die Messwerte an Bipolarplatten sind in Tabelle 6 und Figur 5 zusammengefaßt. Die Verfahrensparameter waren exakt gleich, und es wurde einzig der Füllstoff Graphit in Hinblick auf dessen Partikelgröße variiert (Figur 6 und 7). Verwendet wurde ein sogenannter Standard Graphit Thermocarb CF-300 mit einer mittleren Partikelgröße (Figur 6) von -130 µm und ein sogenannter Micronized Graphit Thermocarb CF-300 mit einer mittleren Partikelgröße (Figur 7) von ∼10 µm. Es zeigt sich sehr deutlich, dass die mit Standard Graphit erzielbaren spezifischen Volumen-Durchgangswiderstände deutlich geringer ausfallen. Zudem wird auch hier der Leitfähigkeitszugewinn bei Nutzung binärer Ruß/Graphit-Füllstoffsysteme deutlich.

Bipolarplatten-Rohlinge wurden durch Formpressen auf einer Laborpresse vom Typ P300P mit Tauchkantenwerkzeug der Firma Collin hergestellt. Die Plattenfläche betrug 160*160 mm. Die Mischungen der Rohstoffe wurden im Werkzeug auf 300 °C aufgeheizt, anschließend für 5 min bei 100 - 250 bar gepresst und danach bei 50 - 125 bar im 900s von 300 °C auf 40 °C, also mit ∼ 0,3 °C/s abgekühlt.

Die Spalte "Zusammensetzung" in den Tabellen 6 bis 10 ist wie folgt zu lesen:

Die Summe der Gewichtsanteile aus Kunststoff (LCP oder PPS) und Ruß (R) beträgt immer 100%. LCP/R-5/G-195 bezeichnet somit eine Mischung aus 95% Gew.-% LCP, 5 Gew..-% Ruß und 195 Gew.-% Graphit (G). Der massenbezogene Füllgrad φM berechnet sich wie folgt: φM = (Masse Ruß + Masse Graphit) / (Masse Kunststoff + Masse Ruß + Masse Graphit).

**Tabelle 6:**

| **LCP,** Standard Graphit CF-300 | Zusammensetzung | φM / Gew.-% | Spez. Widerstand RD / Ω cm |
|---|---|---|---|
| Vergleichsbeispiel 90 | LCP/R-0/G-300 | 75 | 0,0043 |
| Vergleichsbeispiel 91 | LCP/R-0/G-250 | 71,4 | 0,0048 |
| Vergleichsbeispiel 92 | LCP/R-0/G-200 | 66,6 | 0,0065 |
| Vergleichsbeispiel 93 | LCP/R-0/G-150 | 60 | 0,0105 |
| Vergleichsbeispiel 94 | LCP/R-0/G-100 | 50 | 0,0277 |
| | | | |
| | | | |
| Beispiel 95 | LCP/R-5/G-295 | 75,87 | 0,0028 |
| Beispiel 96 | LCP/R-5/G-245 | 72,45 | 0,0033 |
| Beispiel 97 | LCP/R-5/G-195 | 67,7 | 0,0045 |
| Beispiel 98 | LCP/R-5/G-145 | 61,24 | 0,0063 |
| Beispiel 99 | LCP/R-5/G-95 | 51,17 | 0,0127 |
| Beispiel 100 | LCP/R-7,5/G-267,5 | 74,48 | 0,0034 |
| Beispiel 101 | LCP/R-7,5/G-242,5 | 72,99 | 0,0035 |
| Beispiel 102 | LCP/R-7,5/G-192,5 | 68,37 | 0,0041 |
| Beispiel 103 | LCP/R-7,5/G-142,5 | 61,89 | 0,0060 |
| Beispiel 104 | LCP/R-7,5/G-92,5 | 51,9 | 0,0095 |
| Beispiel 105 | LCP/R-10/G-190 | 68,96 | - |
| Beispiel 106 | LCP/R-10/G-140 | 62,56 | 0,0056 |
| Beispiel 107 | LCP/R-10/G-90 | 52,66 | 0,0075 |
| Beispiel 108 | LCP/R-12,5/G-87,5 | 53,28 | 0,0073 |
| | | | |

| **LCP,** Micronized Graphit, CF-300 | Zusammensetzung | φM / Gew.-% | Spez. Widerstand RD / Ω cm |
|---|---|---|---|
| Vergleichsbeispiel 109 | LCP/R-0/G-400 | 80 | 0,0050 |
| Vergleichsbeispiel 110 | LCP/R-0/G-375 | 78,95 | 0,0055 |
| Vergleichsbeispiel 111 | LCP/R-0/G-350 | 77,78 | 0,0068 |
| Vergleichsbeispiel 112 | LCP/R-0/G-325 | 76,47 | 0,0075 |
| Vergleichsbeispiel 113 | LCP/R-0/G-300 | 75 | 0,0086 |
| Vergleichsbeispiel 114 | LCP/R-0/G)-250 | 71,4 | 0,0110 |
| Vergleichsbeispiel 115 | LCP/R-0/G-200 | 66,6 | 0,0160 |
| Vergleichsbeispiel 116 | LCP/R-0/G-150 | 60 | 0,0308 |
| Vergleichsbeispiel 117 | LCP/R-0/G-100 | 50 | 0,0865 |
| | | | |
| Beispiel 118 | LCP/R-5/G-295 | 75,87 | 0,0066 |
| Beispiel 119 | LCP/R-5/G-245 | 72,45 | 0,0083 |
| Beispiel 120 | LCP/R-5/G-195 | 67,7 | 0,0118 |
| Beispiel 121 | LCP/R-5/G-145 | 61,24 | 0,0169 |
| Beispiel 122 | LCP/R-5/G-95 | 51,17 | 0,0392 |
| | | | |
| Beispiel 123 | LCP/R-7,5/G-267,5 | 74,48 | 0,0053 |
| Beispiel 124 | LCP/R-7,5/G-242,5 | 72,99 | 0,0073 |
| Beispiel 125 | LCP/R-7,5/G-192,5 | 68,37 | 0,0103 |
| Beispiel 126 | LCP/R-7,5/G-142,5 | 61,89 | 0,0139 |
| Beispiel 127 | LCP/R-7,5/G-92,5 | 51,9 | 0,0295 |
| | | | |
| Beispiel 128 | LCP/R-10/G-190 | 68,96 | 0,0071 |
| Beispiel 129 | LCP/R-10/G-140 | 62,56 | 0,0105 |
| Beispiel 130 | LCP/R-10/G-90 | 52,66 | 0,0194 |
| | | | |
| Beispiel 131 | LCP/R-12,5/G-87,5 | 53,28 | - |

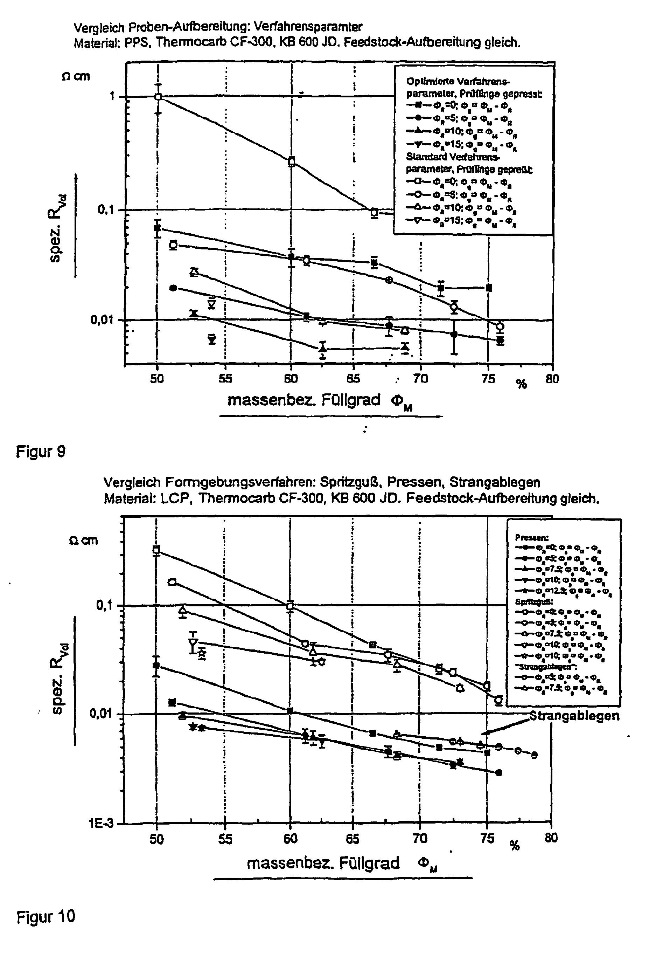

Der Einfluss von Aufbereitungsparametern und Probenhomogenität auf die spezifischen Volumendurchgangswiderstände sind für LCP-Bipolarplatten in Figur 8 und Tabelle 7 zusammengefasst, die für PPS-Bipotarplatten in Figur 9 und Tabelle 8.

Bipolarplatten-Rohlinge wurden durch Formpressen auf einer Laborpresse vom Typ P300P mit Tauchkantenwerkzeug der Firma Collin hergestellt. Die Plattenfläche betrug 160*160 mm. Die Mischungen der Rohstoffe wurden im Werkzeug auf 300 °C aufgeheizt, anschließend für 5 min bei 100 - 250 bar gepresst und danach bei 50 - 125 bar mit 0,3 °C/s auf 40 °C abgekühlt.

Der wesentliche verfahrenstechnische Unterschied zwischen "Standard Aufbereitung" und "Optimierte Aufbereitung" ist im Schneckenkonzept zu sehen. Letzere Schneckenkonfiguration beinhaltet nach der oder den Graphit-Füllstoffzudosierung(en) Förderelemente mit zweifacher axialer Abstauung und möglichst wenige oder keine Funktionselemente (Misch- und Knetelemente).

Weiterhin wurde das Granulat zum Formpressen der Platten-Prüflinge der Einstellung "Optimierte Aufbereitung" vor dem Formgebungsschritt mit einem Backenbrecher gemahlen und mit einem 1000 µm Sieb fraktioniert, um eine bessere Bipolarplatten-Homogenität zu gewährleisten. Dies verbessert sowohl mechanische als auch elektrische Eigenschaften, da einerseits keine Komgrenzen im Prüfling verbleiben und andererseits mit Polymer gecoatete Füllstoffe (insbesondere Graphit) aufgebrochen werden.

Es zeigt sich sowohl für LCP-Bipolarplatten als auch für PPS-Biplorplatten, dass einerseits eine schonende Aufbereitung geringere spezifische Volumendurchgangswiderstände gewährleistet, und andererseits, dass das in die Kavität vorgelegte Material zur Bauteilgenerierung möglichst homogen sein muß, d.h. bevorzugt nicht in Granulatform sondern als einheitlicher Vorformling "in einem Guss", bevorzugt in "erster Wärme", in die Formgebungseinheit verbracht werden sollte.

**Tabelle 7:**

| **LCP,** Standard Graphit CF-300 Optimierte Aufbereitung | Zusammensetzung | φM / Gew.-% | Spez. Widerstand RD / Ω cm |
|---|---|---|---|
| Vergleichsbeispiel 132 | LCP/R-0/G-300 | 75 | 0,0043 |
| Vergleichsbeispiel 133 | LCP/R-0/G-250 | 71,4 | 0,0048 |
| Vergleichsbeispiel 134 | LCP/R-0/G-200 | 66,6 | 0,0065 |
| Vergleichsbeispiel135 | LCP/R-0/G-150 | 60 | 0,0105 |
| Vergleichsbeispiel 136 | LCP/R-0/G-100 | 50 | 0,0277 |
| | | | |
| | | | |
| Beispiel 137 | LCP/R-5/G-295 | 75,87 | 0,0028 |
| Beispiel 138 | LCP/R-5/G-245 | 72,45 | 0,0033 |
| Beispiel 139 | LCP/R-5/G-195 | 67,7 | 0,0045 |
| Beispiel 140 | LCP/R-5/G-145 | 61,24 | 0,0062 |
| Beispiel 141 | LCP/R-5/G-95 | 51,17 | 0,0127 |
| | | | |
| Beispiel 142 | LCP/R-7,5/G-267,5 | 74,48 | 0,0034 |
| Beispiel 143 | LCP/R-7,5/G-242,5 | 72,99 | 0,0035 |
| Beispiel 144 | LCP/R-7,5/G-192,5 | 68,37 | 0,0041 |
| Beispiel 145 | LCP/R-7,5/G-142,5 | 61,89 | 0,0060 |
| Beispiel 146 | LCP/R-7,5/G-92,5 | 51,9 | 0,0095 |
| | | | |
| Beispiel 147 | LCP/R-10/G-190 | 68,96 | -- |
| Beispiel 148 | LCP/R-10/G-140 | 62,56 | 0,0056 |
| Beispiel 149 | LCP/R-10/G-90 | 52,66 | 0,0075 |
| | | | |
| Beispiel 150 | LCP/R-12,5/G-87,5 | 53,28 | 0,0073 |
| | | | |

| **LCP,** Standard Graphit CF-300 Standard Aufbereitung | Zusammensetzung | φM / Gew.-% | Spez. Widerstand RD / Ω cm |
|---|---|---|---|
| Vergleichsbeispiel 151 | LCP/R-0/G-300 | 75 | 0,0093 |
| Vergleichsbeispiel152 | LCP/R-0/G-250 | 71,4 | 0,0190 |
| Vergleichsbeispiel 153 | LCP/R-0/G-200 | 66,6 | 0,0275 |
| Vergleichsbeispiel 154 | LCP/R-0/G-150 | 60 | 0,0497 |
| Vergleichsbeispiel 155 | LCP/R-0/G-100 | 50 | 0,1819 |
| | | | |
| | | | |
| Beispiel 156 | LCP/R-5/G-295 | 75,87 | 0,0049 |
| Beispiel 157 | LCP/R-5/G-245 | 72,45 | 0,0087 |
| Beispiel 158 | LCP/R-5/G-195 | 67,7 | 0,0122 |
| Beispiel 159 | LCP/R-5/G-145 | 61,24 | 0,0195 |
| Beispiel 160 | LCP/R-5/G-95 | 51,17 | 0,0642 |
| | | | |
| Beispiel 161 | LCP/R-7,5/G-267,5 | 74,48 | - |
| Beispiel 162 | LCP/R-7,5/G-242,5 | 72,99 | 0,0062 |
| Beispiel 163 | LCP/R-7,5/G-192,5 | 68,37 | 0,0066 |
| Beispiel 164 | LCP/R-7,5/G-142,5 | 61,89 | 0,0155 |
| Beispiel 165 | LCP/R-7,5/G-92,5 | 51,9 | 0,0319 |
| | | | |
| Beispiel 166 | LCP/R-10/G-190 | 68,96 | - |
| Beispiel 167 | LCP/R-10/G-140 | 62,56 | 0,0124 |
| Beispiel 168 | LCP/R-10/G-90 | 52,66 | 0,0221 |
| | | | |
| Beispiel 169 | LCP/R-12,5/G-87,5 | 53,28 | 0,0194 |

**Tabelle 8:**

| **PPS,** Standard Graphit CF-300 Optimierte Aufbereitung | Zusammensetzung | φM / Gew.-% | Spez. Widerstand RD / Ω cm |
|---|---|---|---|
| Beispiel 170 | PPS/R-15/G-85 | 53,93 | 0,0067 |
| Beispiel 171 | PPS/R-10/G-190 | 68,86 | 0,0055 |
| Beispiel 172 | PPS/R-10/G-140 | 62,56 | 0,0053 |
| Beispiel 173 | PPS/R-10/G-90 | 52,66 | 0,0112 |
| Beispiel 174 | PPS/R-5/G-295 | 75,87 | 0,0065 |
| Beispiel 175 | PPS/R-5/G-245 | 72,45 | 0,0074 |
| Beispiel 176 | PPS/R-5/G-195 | 67,7 | 0,0088 |
| Beispiel 177 | PPS/R-5/G-145 | - 61,24 | 0,0106 |
| Beispiel 178 | PPS/R-5/G-95 | 51,17 | 0,0196 |
| | | | |
| Vergleichsbeispiel 179 | PPS/R-0/G-300 | 75 | 0,0198 |
| Vergleichsbeispiel 180 | PPS/R-0/G-250 | 71,4 | 0,0193 |
| Vergleichsbeispiel 181 | PPS/R-0/G-200 | 66,6 | 0,0332 |
| Vergleichsbeispiel 182 | PPS/R-0/G-150 | 60 | 0,0372 |
| Vergleichsbeispiel 183 | PPS/R-0/G-100 | 50 | 0,0685 |
| | | | |
| | | | |

| **PPS,** Standard Graphit CF-300 Standard Aufbereitung | Zusammensetzung | φM / Gew.-% | Spez. Widerstand RD / Ω cm |
|---|---|---|---|
| Beispiel 184 | PPS/R-15/G-85 | 53,93 | 0,0142 |
| | | | |
| Beispiel 185 | PPS/R-10/G-190 | 68,86 | 0,0080 |
| Beispiel 1.86 | PPS/R-10/G-140 | 62,56 | 0,0096 |
| Beispiel 187 | PPS/R-10/G-90 | 52,66 | 0,0271 |
| | | | |
| Beispiel 188 | PPS/R-5/G-295 | 75,87 | 0,0088 |
| Beispiel 189 | PPS/R-5/G-245 | 72,45 | 0,0132 |
| Beispiel 190 | PPS/R-5/G-195 | 67,7 | 0,0229 |
| Beispiel 191 | PPS/R-5/G-145 | 61,24 | 0,0346 |
| Beispiel 192 | PPS/R-5/G-95 | 51,17 | 0,0481 |
| | | | |
| Vergleichsbeispiel 193 | PPS/R-0/G-300 | 75 | 0,0762 |
| Vergleichsbeispiel 194 | PPS/R-0/G-250 | 71,4 | 0,0849 |
| Vergleichsbeispiel 195 | PPS/R-0/G-200 | 66,6 | 0,0932 |
| Vergleichsbeispiel 196 | PPS/R-0/G-150 | 60 | 0,2602 |
| Vergleichsbeispiel 197 | PPS/R-0/G-100 | 50 | 0,9852 |

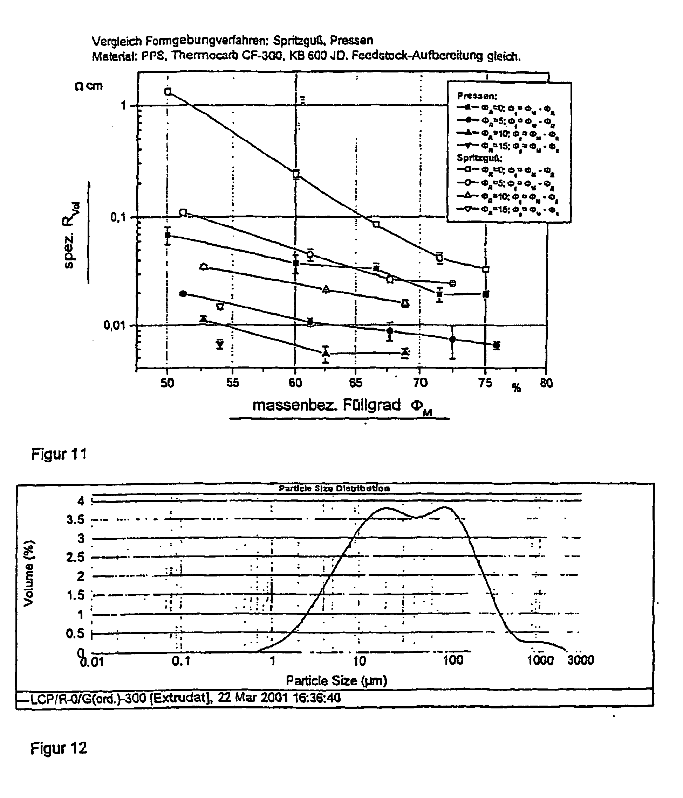

Den Einfluß der Verarbeitung auf den spezifischen Volumendurchgangswiderstand zeigt Figur 10 für LCP-Einstellungen und Figur 11 für PPS-Einstellungen. Die Messwerte sind in den Tabellen 9 und 10 zusammengestellt.

Zur Herstellung von Probeplatten durch Formpressen wurden die gleichen Verfahrensparameter wie zur Herstellung von Bipolarplatten-Rohlingen (Tabelle 7 & 8) verwendet. Zum Spritzguss wurden Maschinen der Firmen Arburg (Typ Allrounder) sowie Krauss-Maffei eingesetzt. Die Verarbeitungsempfehlungen für Vectra (LCP) und Fortron (PPS) in den Produktbroschüren der Ticona GmbH wurden beachtet. Zur Herstellung von Probeplatten durch Strangablegen wurde eine Laborpresse vom Typ P300P mit Tauchkantenwerkzeug der Firma Collin direkt mit dem aus einem Extruder (Typ ZSK 25 der Firma Werner & Pfleiderer) austretenden Schmelzestrang beschickt. Die Plattenfläche betrug 160*160 mm. Die Schmetzestrangtemperatur betrug 300 - 320 °C, die Temperatur der Kavität der Presse 300 °C. Die Schmelze wurde für 5 min bei 100 - 250 bar gepresst und danach bei 50 - 125 bar mit 0,3 °C/s auf 40 °C abgekühlt.

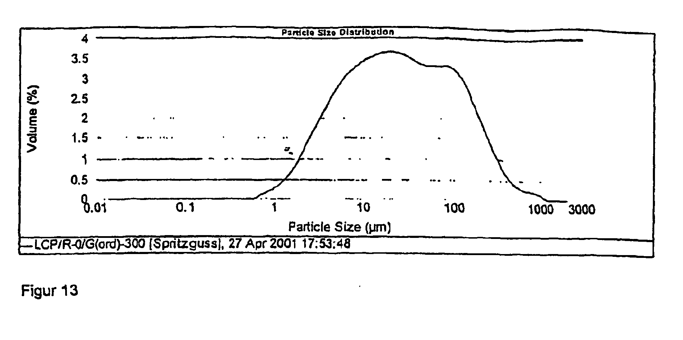

Es zeigt sich für beide Materialien, LCP und PPS, dass mittels Standardspritzgießen hergestellte Probeplatten wesentlich höhere Volumendurchgangswiderstände aufweisen als formgepresste Prüflinge. Die durch Strangablegen, in diesem Fall von Flachstrangabschnitten, in eine Formpresskavität hergestellten Proben zeigen etwas schlechtere Messwerte als die des Formpressens (Figur 10). Aus Figur 12 und 13 wird ersichtlich, dass durch den erneuten scherenergieinduzierten Aufschmelzvorgang im Plastifizieraggregat der Spritzgießmaschine und insbesondere durch Scher- und Deformationsvorgänge beim Einspritzen der plastifizierten Masse in die Kavität, eine Graphit-Partikelschädigung erfolgt, wie sie beim Formpressen oder Strangablegen oder Spritzprägen und insbesondere bei solchen Verfahren, die einstufig verlaufen, nicht zu beobachten ist.

**Tabelle 9:**

| **LCP,** Standard Graphit CF-300 Graphit Formpressen | Zusammensetzung | φM / Gew.-% | Spez. Widerstand SPez. Widerstand RD / Ω cm |
|---|---|---|---|
| Vergleichsbeispiel 198 | LCP/R-0/G-300 | 75 | 0,0043 |
| Vergleichsbeispiel 199 | LCP/R-0/G-250 | 71,4 | 0,0048 |
| Vergleichsbeispiel 200 | LCP/R-0/G-200 | 66,6 | 0,0065 |
| Vergleichsbeispiel 201 | LCP/R-0/G-150 | 60 | 0,0105 |
| Vergleichsbeispiel 202 | LCP/R-0/G-100 | 50 | 0,0277 |
| | | | |
| | | | |
| Beispiel 203 | LCP/R-5/G-295 | 75,87 | 0,0028 |
| Beispiel 204 | LCP/R-5/G-245 | 72,45 | 0,0033 |
| Beispiel 205 | LCP/R-5/G-195 | 67,7 | 0,0045 |
| Beispiel 206 | LCP/R-5/G-145 | 61,24 | 0,0063 |
| Beispiel 207 | LCP/R-5/G-95 | 51,17 | 0,0127 |
| | | | |
| Beispiel 208 | LCP/R-7,5/G-267,5 | 74,48 | 0,0034 . |
| Beispiel 209 | LCP/R-7,5/G-242,5 | 72,99 | 0,0035 |
| Beispiel 210 | LCP/R-7,5/G-192,5 | 68,37 | 0,0041 |
| Beispiel 211 | LCP/R-7,5/G-142,5 | 61,89 | 0,0060 |
| Beispiel 212 | LCP/R-7,5/G-92,5 | 51,9 | 0,0095 |
| | | | |
| Beispiel 213 | LCP/R-10/G-140 | 62,56 | 0,0056 |
| Beispiel 214 | LCP/R-10/G-90 | 52,66 | 0,0075 |
| | | | |
| Beispiel 215 | LCP/R-12,5/G-87,5 | 53,28 | 0,0073 |
| | | | |
| Beispiel 216 | LCP/R-5/G-0 | 5 | 13,45 |
| Beispiel 217 | LCP/R-7,5/G-0 | 7,5 | 1,71 |
| Beispiel 218 | LCP/R-10/G-0 | 10 | 0,51 |
| Beispiel 219 | LCP/R-12,5/G-0 | 12,5 | 0,21 |
| | | | |
| | | | |

| **LCP,** Standard Graphit CF-300 Spritzguß | Zusammensetzung | φM / Gew.-% | Spez. Wdersiand RD / Ω cm |
|---|---|---|---|
| Vergleichsbeispiel 220 | LCP/R-0/G-300 | 75 | 0,0177 |
| Vergleichsbeispiel 221 | LCP/R-0/G-250 | 71,4 | 0,0252 |
| Vergleichsbeispiel 222 | LCP/R-0/G-200 | 66,6 | 0,0427 |
| Vergleichsbeispiel 223 | LCP/R-0/G-150 | 60 | 0,0970 |
| Vergleichsbeispiel 224 | LCP/R-0/G-100 | 50 | 0,3285 |
| | | | |
| | | | |
| Beispiel 225 | LCP/R-5/G-295 | 75,87 | 0,0131 |
| Beispiel 226 | LCP/R-5/G-245 | 72,45 | 0,0235 |
| Beispiel 227 | LCP/R-5/G-195 | 67,7 | 0,0347 |
| Beispiel 228 | LCP/R-5/G-145 | 61,24 | 0,0439 |
| Beispiel 229 | LCP/R-5/G-95 | 51,17 | 0,1652 |
| | | | |
| Beispiel 230 | LCP/R-7,5/G-267,5 | 72,99 | 0,0168 |
| Beispiel 231 | LCP/R-7,5/G-242,5 | 68,37 | 0,0279 |
| Beispiel 232 | LCP/R-7,5/G-192,5 | 61,89 | 0,0363 |
| Beispiel 233 | LCP/R-7,5/G-142,5 | 51,9 | 0,0889 |
| Beispiel 234 | LCP/R-7,5/G-92,5 | | |
| | | | |
| Beispiel 235 | LCP/R-10/G-140 | 62,56 | 0,0299 |
| Beispiel 236 | LCP/R-10/G-90 | 52,66 | 0,0459 |
| | | | |
| Beispiel 237 | LCP/R-12,5/G-87,5 | 53,28 | 0,0357 |
| | | | |
| Beispiel 238 Vergleich | LCP/R-5/G-0 | 5 | 3,76 |
| Beispiel 239 " | LCP/R-7,5/G-0 | 7,5 | 1,77 |
| Beispiel 240 " | LCP/R-10/G-0 | 10 | 0,61 |
| Beispiel 241 " | LCP/R-12,5/G-0 | 12,5 | 0,35 |
| | | | |
| | | | |

| **LCP** Standard Graphit CF-300 Strangablegen | Zusammensetzung | φM / Gew.-% | Spez. Widerstand RD / Ω cm |
|---|---|---|---|
| Beispiel 242 | LCP/R-5/G-345 | 78,65 | 0,0041 |
| Beispiel 243 | LCP/R-5/G-320 | 77,38 | 0,0046 |
| Beispiel 244 | LCP/R-5/G-295 | 75,87 | 0,0049 |
| Beispiel 245 | LCP/R-5/G-245 | 72,45 | 0,0055 |
| | | | |
| Beispiel 246 | LCP/R-7,5/G-267,5 | 74,48 | 0,0051 |
| Beispiel 247 | LCP/R-7,5/G-242,5 | 72,99 | 0,0055 |
| Beispiel 248 | LCP/R-7,5/G-192,5 | 68,37 | 0,0064 |

**Tabelle 10:**

| **PPS,** Standard Graphit CF-300 Formpressen | Zusammensetzung | φM / Gew.-% | Spez. Widerstand RD / Ω cm |
|---|---|---|---|
| Beispiel 249 | PPS/R-15/G-85 | 53,93 | 0,0067 |
| | | | |
| Beispiel 250 | PPS/R-10/G-190 | 68,86 | 0,0055 |
| Beispiel 251 | PPS/R-10/G-140 | 62,56 | 0,0054 |
| Beispiel 252 | PPS/R-10/G-90 | 52,66 | 0,0112 |
| | | | |
| Beispiel 253 | PPS/R-5/G-295 | 75,87 | 0,0065 |
| Beispiel 254 | PPS/R-5/G-245 | 72,45 | 0,0074 |
| Beispiel 255 | PPS/R-5/G-195 | 67,7 | 0,0088 |
| Beispiel 256 | PPS/R-5/G-145 | 61,24 | 0,0106 |
| Beispiel 257 | PPS/R-5/G-95 | 51,17 | 0,0196 |
| | | | |
| Vergleichsbeispiel 258 | PPS/R-0/G-300 | 75 | 0,0198 |
| Vergleichsbeispiel 259 | PPS/R-0/G-250 | 71,4 | 0,0193 |
| Vergleichsbeispiel 260 | PPS/R-0/G-200 | 66,6 | 0,0332 |
| Vergleichsbeispiel 261 | PPS/R-0/G-150 | 60 | 0,0372 |
| Vergleichsbeispiel 262 | PPS/R-0/G-100 | 50 | 0,0685 |
| | | | |
| Vergleichsbeispiel 263 | PPS/R-5/G-0 | 5 | 5,02 |
| Vergleichsbeispiel 264 | PPS/R-10/G-0 | 10 | 0,29 |
| Vergleichsbeispiel 265 | PPS/R-15/G-0 | 15 | 0,093 |
| | | | |

| **PPS,** Standard Graphit CF-300 Spritzguß | Zusammensetzung | φM / Gew.-% | Spez. Widerstand RD / Ω cm |
|---|---|---|---|
| Beispiel 266 | PPS/R-15/G-85 | 53,93 | 0,0149 |
| | | | |
| Beispiel 267 | PPS/R-10/G-190 | 68,86 | 0,0159 |
| Beispiel 268 | PPS/R-10/G-140 | 62,56 | 0,0214 |
| Beispiel 269 | PPS/R-10/G-90 | 52,66 | 0,0347 |
| | | | |
| Vergleichsbeispiel 270 | PPS/R-5/G-295 | 75,87 | |
| Vergleichsbeispiel 271 | PPS/R-5/G-245 | 72,45 | 0,0246 |
| Vergleichsbeispiel 272 | PPS/R-5/G-195 | 67,7 | 0,0266 |
| Vergleichsbeispiel 273 | PPS/R-5/G-145 | 61,24 | 0,0449 |
| Vergleichsbeispiel 274 | PPS/R-5/G-95 | 51,17 | 0,1099 |
| | | | |
| Vergleichsbeispiel 275 | PPS/R-0/G-300 | 75 | 0,0331 |
| Vergleichsbeispiel 276 | PPS/R-0/G-250 | 71,4 | 0,0419 |
| Vergleichsbeispiel 277 | PPS/R-0/G-200 | 66,6 | 0,0848 |
| Vergleichsbeispiel 278 | PPS/R-0/G-150 | 60 | 0,24 |
| Vergleichsbeispiel 279 | PPS/R-0/G-100 | 50 | 1,34 |
| | | | |
| Vergleichsbeispiel 280 | PPS/R-5/G-0 | 5 | 1,58 |
| Vergleichsbeispiel 281 | PPS/R-10/G-0 | 10 | 0,40 |

## Patentansprüche

1. Verwendung einer leitfähigen Kunststoff-Formmasse basierend auf Polyarylensulfid und/oder flüssigkristallinem Kunststoff, wobei die Formmasse als leitfähige Bestandteile
A) Ruß und Graphit oder
B) Ruß und Metallpulver oder
C) Ruß und Graphit und Metallpulver
enthält, der Ruß eine spezifische Oberfläche von 500 bis 1500 m²/g, und eine Dibutylphthalatzahl von 100 bis 700 ml/100g und der Graphit eine spezifische Oberfläche von 1 m²/g bis 35 m²/g besitzt, zur Herstellung von Formkörpern, wobei die Formkörper eine Bipolarplatte, eine Endplatte oder ein Teil einer Endplatte einer Brennstoffzelle sind.

2. Verwendung nach Anspruch 1, wobei der massenbezogene Füllgrad von Null verschieden und kleiner als 85, vorteilhaft kleiner oder gleich 80 ist.

3. Verwendung nach Anspruch 1 oder 2, wobei die Teilchengrößen der Rußpartikel in der Polymermatrix der Formmasse im Bereich von 0,01 µm bis 2 µm, vorteilhaft im den Bereich von 0,05 µm bis 0,15 µm liegt.

4. Verwendung nach einem oder mehreren der Ansprüche 1 bis 3, wobei der verwendete Graphit ein Graphit mit schwach ausgeprägter Struktur ist.

5. Verwendung nach einem oder mehreren der Ansprüche 1 bis 4, wobei der verwendete Graphit eine Partikelgröße von 1 µm bis 1100 µm bei einer mittleren Partikelgröße von 50 bis 450 µm besitzt.

6. Verwendung nach einem oder mehreren der Ansprüche 1 bis 5, wobei das verwendete Metallpulver eine Fülldichte nach ISO 3923/1 von 1 bis 4 g/ml besitzt.

7. Verwendung nach einem oder mehreren der Ansprüche 1 bis 6, wobei das verwendete Metallpulver Teilchengrößen bis 45 µm zu einem Anteil von 5% enthält.

## Claims

1. Use of a conductive plastics moulding composition based on polyarylene sulfide and/or on liquid-crystalline plastic, where the moulding composition comprises, as conductive constituents,
A) carbon black and graphite, or
B) carbon black and metal powder, or
C) carbon black and graphite and metal powder,
the carbon black has a specific surface area of from 500 to 1500 m²/g, and a dibutyl phthalate value of from 100 to 700 ml/100g, and the graphite has a specific surface area of from 1 to 35 m²/g, for producing mouldings, where the mouldings are a bipolar plate, an end plate, or a part of an end plate of a fuel cell.

2. Use according to Claim 1, where the filler loading by weight is non-zero and less than 85, advantageously less than or equal to 80.

3. Use according to Claim 1 or 2, where the particle sizes of the carbon black particles in the polymer matrix of the moulding composition are in the range from 0.01 to 2 µm, advantageously in the range from 0.05 to 0.15 µm.

4. Use according to one or more of Claims 1 to 3, where the graphite used is a graphite with no strongly developed structure.

5. Use according to one or more of Claims 1 to 4, where the particle size of the graphite used is from 1 to 1100 µm, with a median particle size of from 50 to 450 µm.

6. Use according to one or more of Claims 1 to 5, where the apparent density to ISO 3923/1 of the metal powder used is from 1 to 4 g/ml.

7. Use according to one or more of Claims 1 to 6, where the metal powder used comprises a fraction of 5% with particle sizes up to 45 µm.

## Revendications

1. Utilisation d'une masse de moulage conductible en matériau synthétique à base de poly(sulfure d'arylène) et/ou d'un matériau synthétique à cristaux liquides, la masse de moulage contenant comme constituants conductibles
A) de la suie et du graphite ou
B) de la suie et une poudre de métal ou
C) de la suie et du graphite et une poudre de métal,
la suie présentant une surface spécifique de 500 à 1500 m²/g et un indice de phtalate de dibutyle de 100 à 700 ml/100 g et le graphite présentant une surface spécifique de 1 m²/g à 35 m²/g, pour la fabrication de corps moulés, les corps moulés étant une plaque bipolaire, une plaque d'extrémité ou une partie d'une plaque d'extrémité d'une cellule à combustible.

2. Utilisation selon la revendication 1, le degré de remplissage par rapport à la masse étant différent de zéro et inférieur à 85, avantageusement inférieur ou égal à 80.

3. Utilisation selon la revendication 1 ou 2, les grosseurs des particules de suie dans la matrice polymère de la masse de moulage étant situées dans la plage de 0,01 µm à 2 µm, de préférence dans la plage de 0,05 µm à 0,15 µm.

4. Utilisation selon l'une ou plusieurs des revendications 1 à 3, le graphite utilisé étant un graphite avec une structure peu prononcée.

5. Utilisation selon l'une ou plusieurs des revendications 1 à 4, le graphite utilisé présentant une grosseur de particules de 1 µm à 1100 µm à une grosseur moyenne des particules de 50 à 450 µm.

6. Utilisation selon l'une ou plusieurs des revendications 1 à 5, la poudre de métal utilisée présentant une masse volumique non tassée selon la norme ISO 3923/1 de 1 à 4 g/ml.

7. Utilisation selon l'une ou plusieurs des revendications 1 à 6, la poudre de métal contenant des grosseurs de particules jusqu'à 45 µm en une proportion de 5%.
